# EUROPEAN PATENT SPECIFICATION

(11) **EP 1 453 346 B1**
(45) Date of publication and mention of the grant of the patent: **27.09.2006**
(21) Application number: 03425123.1
(22) Date of filing: 27.02.2003
(51) Int. Cl.: H04Q 11/04

(54) **Configurable electrical transceiver in a small form factor pluggable module realising coded interfaces**
Konfigurierbarer elektrischer kodierte Schnittstellen realisierender Sendeempfänger in einem Small-Form-Factor-Pluggable(SFP)-Modul
Emetteur-récepteur éléctrique configurable dans un module Small-Form-Factor-Pluggable(SFP) réalisant des interfaces codées

(43) Date of publication of application: 01.09.2004
(73) Proprietor: SIEMENS AKTIENGESELLSCHAFT, 80333 München (DE)
(72) Inventor: Mosca, Giovanni, 67100 L'Aquila (IT); Saracino, Sante, 02015 Citta Ducale (IT)

(56) References cited:
- GUINEA J ET AL: "A Single Chip 155Mbps/140Mbps SDH/PDH Transceiver" PROCEEDINGS OF THE IEEE 2000 CUSTOM INTEGRATED CIRCUITS CONFERENCE, ORLANDO, FL, USA, 21 - 24 May 2000, pages 315-318, XP002249905
- SMALL FORM-FACTOR PLUGGABLE (SFP) TRANSCEIVER MULTISOURCE AGREEMENT (MSA), 14 September 2000 (2000-09-14), pages 1-38, XP002249906

## Description

### Field of the invention

The present invention relates to an electrical transceiver which realises both of the SDH-STM1/Sonet-STS3 and PDH-E4 ITU-T G.703 CMI (Code Mark Inversion) coded interface.

The claimed electrical transceiver is realised in a Small Form Factor Pluggable Module and can be programmed as STM1/STS3 or E4-PDH by simply applying the right configuration on the Serial Identification interface.

This allows to adopt the same interface for both applications and to specialise it on field at the moment of its utilisation.

### Background art

In the Sonet/SDH standards, the STM1/STS3 interfaces are specified in two different versions according to the nature of the signal adopted for the transmission.

The signal format can, in fact, be either electrical or optical :
- The electrical signal is normally used for intra station connections;
- The optical format can cover, with different implementation, the short as well as the long haul connections.

These cards are normally multi-port; and the high degree of integration achieved today allows modularity of more than 10 interfaces/card.

Another type of transmission interface very popular before the advent of the SDH/Sonet, and still used in the telecom world, is the 144Mbit E4 of the Plesiochronous Digital Hierarchy (PDH).

The realisation within the transmission equipment of the two types of transmission interfaces (STM1/STS3 or PDH-E4) and two types of line card interfaces (optical or electrical), has required, until now, the implementation of distinguished units.

The development and implementation of the many variants of transmission interfaces, translate in :
- more development effort, in HW,SW and management,
- more cost for the customer,
- more items to handle,
- more spares parts,
and, particularly, no reusability in case of transition from electrical to optical or from Plesiochronous to synchronous.

The recent advent of Small Form Factor Pluggable (SFP) optical modules (see "Small Form-Factor Pluggable (SFP) Transceiver MultiSource Agreement (MSA)", 14 September 2000) has reduced some of these problems within the category of the optical interfaces.

Several pluggable module designs and standards have been introduced in which a pluggable module plugs into a receptacle which is electronically connected to a host circuit board.

These standards offer a generally robust design which has been well received in industry and has been used to develop gigabit interface converter (GBIC) and optical converter (SOC) and providing an interface between a computer and a data communication network such as Ethernet or Fibre Channel.

Nevertheless, an electrical module, based on the Small Form Factor Pluggable (SFP) standard, that allows the implementation on a single card, of the STM1/STS3 or PDH-E4 transmission interfaces, in the electrical as well as in the optical format, is considered very useful.

Until now every type of interface was implemented on a different dedicated card.

We had :
- Many STM1/STS3 optical interface card variants (according to the transmission span, and to the wavelength used as for the ITU G.957) : I-1, S-1.1, S-1.2, L-1.1, L-1.2, L1.3
- STM1/STS3 electrical interface card
- E4 PDH electrical interface card

Therefore, there is the need for a versatile module, configurable according to the SDH or PDH electrical standard and that allows the reusability of the same host circuit board in case of transition from electrical to optical line card interface and from Plesiochronous to Synchronous.

This means, for instance, that the E4-PDH variant of the card, still required for interfacing installed legacy equipment, will not risk to be thrown away when this legacy world will disappear, because it can easily be reused as electrical STM1/STS3 (by simple SW modification), or reused as optical STM1/STS3 interface (by substitution of the pluggable module).

This translates in the following advantages :
- Smaller number of items to handle for the customer
- Smaller number of spare parts to store
- The same card (in case of multi port card) can be shared between the electrical and optical interface: card number saving.

A transceiver module configurable so as to act as an SDH STM1 interface or PDH E4 interface is disclosed in the paper "A single Chip 155 Mbps/140 Mbps SDH/PDH Transceiver", J. Guinea et al., Proceedings of the IEEE 2000 Custom Integrated Ciruit Conference, Orlando, FI, USA, 21 - 24 May 2000, pp. 315 - 318, upon which the preamble of claim 1 is based. This prior art transceiver includes: printed circuit means having a first and second end; coaxial connecting means mounted at the first end of said printed circuit means; multipad electrical connecting means mounted at the second end of said printed circuit means; receiving/transmitting means mounted on said printed circuit means and connected to said coaxial connecting means and to said multi-pad electrical means; and timing means connected to said receiving/transmitting means and providing timing signals required by the CMI decoder/encoder.

The prior art transceiver needs an external clock signal for generating the timing signals necessary for the operation of the transmitting means and thus it is not compatible with the SFP MSA, as an SFP MSA compliant host board has no pin for outputting such a clock signal.

### Summary of the invention

The present invention provides a configurable electrical transceiver having the features claimed in the main claim. More specifically, according to the present invention, an intelligent processing unit (ASIC) has been developed able to handle signals for the STM1/STS3 as well as the PDH /E4 transmission interfaces.

According to one aspect of the invention, by adopting such ASIC, an host circuit board has been implemented which can be used for all the following applications:
- STM1/STS3 optical;
- STM1/STS3 electrical;
- E4 PDH electrical,
by plugging-in an electrical transceiver module with the electrical or optical signal interface.

According to the above, the present invention concerns a Configurable Electrical Small form Factor Pluggable Module (CESFP) that is an electrical transceiver, electrically and mechanically compatible with the optical SFP module, realising in a very small space the SDH-STM1/Sonet-STS3 and PDH-E4 ITU-T G.703 CMI (Code Mark Inversion) coded interface.

The CESFP module can be programmed as STM1/STS3 or E4-PDH by simply applying the right configuration on the Serial Identification interface (pins MOD-DEF 1 and MOD-DEF 2).

This allows adopting the same interface for both applications and to specialise it on field at the moment of its utilisation.

The CESFP module is packaged in a metal housing which slides in a metallic booth (receptacle plus electrical connector) placed on the host. The receptacle (cage) and the connector pin out are compliant to the Small Form-factor Pluggable (SFP) Transceiver MultiSource Agreement (MSA) September 2000.

The transceiver consists of a printed circuit board having as input/output physical interfaces two different types of connectors:
- A couple of small coax cable connectors providing the line side front access.
- A 20-pad slide-in type connector that connects the module printed circuit board (signals, alarms, power and ground) to the female electrical connector placed on the host board.

The main functions implemented on the printed circuit board are:
- Power supply distribution
- Cable Equaliser
- CMI encoder and decoder
- Alarm detectors
- AC - coupled inputs and outputs data signals
- Configurable Timing signal generation section
- Serial interface for identification and configuration

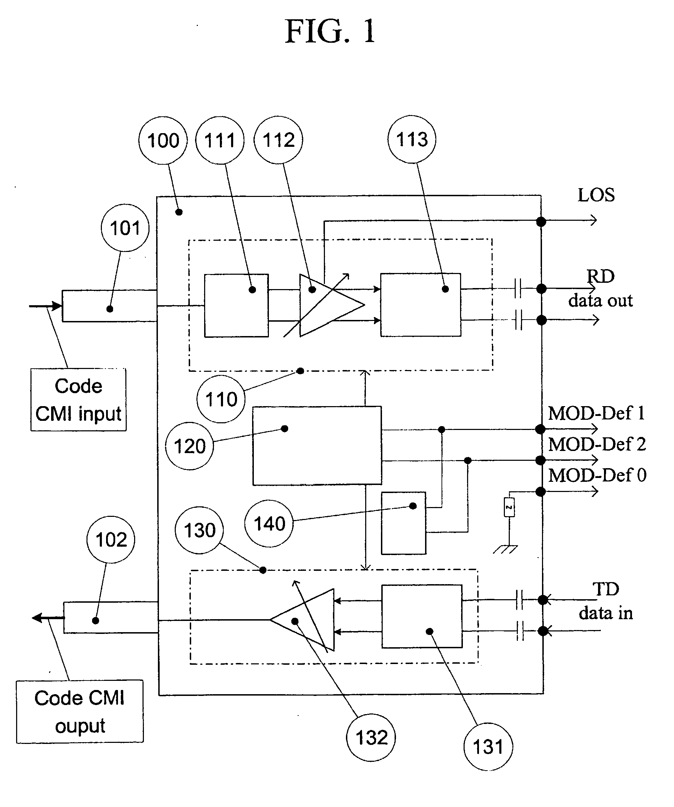

The Figure 1 provides the electrical block diagram as described in the following sections.
In the **receive section**, the CMI coded line signal, is received via a small coax connector. The CMI is a 1B2B non-return-to-zero code where each bit of information is coded into two transmission bits. A binary "0" is coded to "01" and a binary "1" is alternately coded with "00" or "11", thus there is at least one transition during every bit period. A cable equalisation circuit together with an amplifier provide the recover of the original signal shape and amplitude, deteriorated by the cable attenuation and generate the appropriate signal to drive the CMI decoder. The CMI decoder accepts a differential data input and with the support of an internal reference clock returns an NRZ coded data stream, which is routed via two coupling capacitors to the -connector- pads (pins RD+,RD-).

The Loss of signal (LOS) circuit monitors the power level of the incoming signal and generates an alarm when the received signal is below a pre-defined threshold.

The **transmit section** consists of a NRZ/CMI encoder and a transmit buffer.

The differential NRZ signal is received from the pad connector (pin TD+,TD-).

The NRZ data signal, AC-coupled, is routed to the coding circuit and converted into a CMI-coded stream with the support of an internal reference clock.

The transmit buffer provides an output signal capable of driving a 75 Ohm transmission line compliant with ITU-G.703. The transmit CMI coded signal is outputted on a coax cable connector.

The NRZ output/input high-speed balanced-signals are ac-coupled.

The coupling capacitors are large enough to let the SDH test pattern signal pass through without significant distortion or performance penalty.

In the **Configurable Timing signal generation section,** an on board VCO provides the clock reference required by the encoder/decoder to perform the CMI/NRZ and NRZ/CMI conversions.

The device can be configured via a2-wire clocked Serial Interface and set for the STS3/STM1 or PDH-E4 application.

This operation can be done by the host card controller when the module is already in field, and after it has been recognised as an electrical STM1(STS3)/PDH transceiver. This information being stored in the memory (EEPROM) placed on the module, at the moment of its assembling.

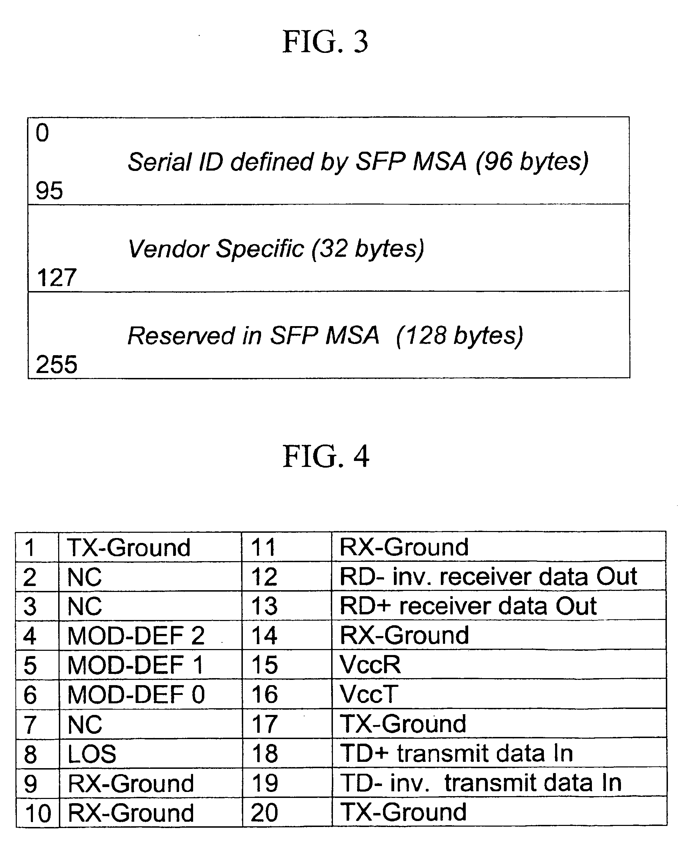

The 2-wire clocked serial interface (I2Cbus) provides access to an internal EEPROM memory where sophisticated identification information (figure 3) have previously been stored in an MSA compliant fashion:
- CESFP's characteristics
- Module manufacturer
- Other information.

The serial interface consists of :
- MOD-DEF 1 - the 2-wire serial interface clock signal
- MOD-DEF 2 - the 2-wire serial interface data signal A **power supply section** supplies the CESFP module.

A ground on the- MOD-DEF 0- pin indicates that the module is present.

### Brief description of figures

The features of the present invention which are considered to be novel are set forth with particularity in the appended claims. The invention together with additional objects and advantages thereof maybe better understood from the following detailed description of a preferred embodiment, taken in conjunction with the accompanying drawings, in which:
**Figure 1** provides the block diagram of the CESFP module.
**Figure 2** provides the interface between the CESFP module and the host circuit board.
**Figure 3** provides the identification information of the internal EEPROM memory.
**Figure 4** provides the pin-out of the pad connector.

### Description of the preferred embodiment of the invention

The embodiment of the invention, shown in the figures wherein like referenced numerals designate identical or corresponding parts, and described below refers to the device object of the invention.

Generally, the configurable electrical transceiver module (CESFP) is realised in a Small Form-factor Pluggable Module (SFP) and the receptacle (cage) and the connector pin out are compliant to a Multi-Source Agreement SFP optical transceiver.

The CESFP module is packaged in a metal housing which slides in a metallic booth (receptacle plus electrical connector) placed on the host.

The module includes a cover, a printed circuit board, a base and a couple of small coax cable connectors.

The invention will be better understood after a discussion of related material as shown in **Figure 1** that discloses the functional block diagram of the configurable electrical transceiver module (CESFP).

The printed circuit board (100) have a first end and a second end.

The first end of the board is connected to the couple of small coax cable connectors (101,102), the first one connector (101) providing the CMI code input from external coaxial cable, the second one connector (102) providing the CMI code output to the external coaxial cable.

At the second end, the printed circuit board have a 20-pad slide-in type connector that connects the printed circuit board (100) to a female electrical connector (201) placed on the host board (200).

Through the 20-pad connector, the circuit board (100) exchanges to/from the host board(200), signals, alarms, power and ground according to the pin-out provided in the table reported in figure 4.

The circuit board(100) have a receive section (110) that receives the line signal, in the CMI code format, through the connector (101).

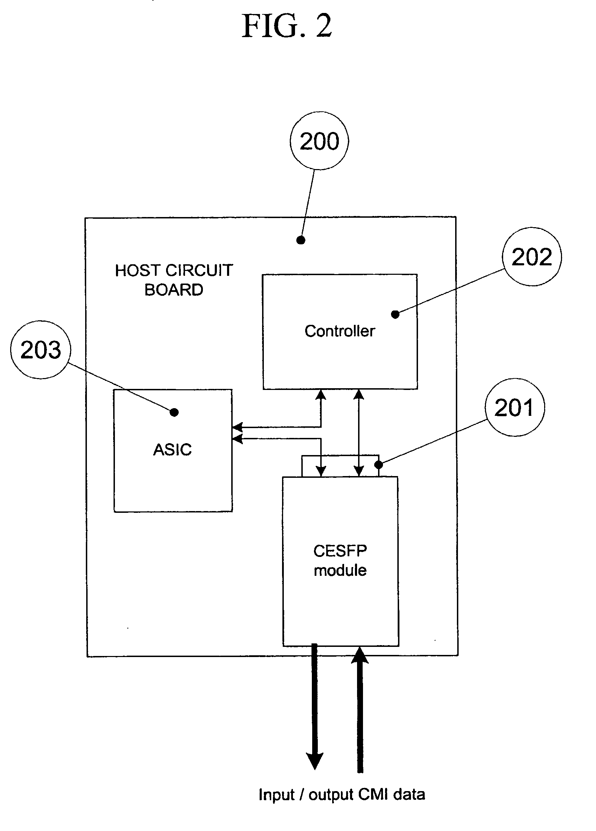

A cable equalisation circuit (111) together with an amplifier (112) provides to recover the original signal shape and amplitude, deteriorated by the cable attenuation and generates the appropriate signal to drive the CMI decoder (113).
The CMI decoder (113) accepts a differential data input and with the support of an internal reference clock, belonging to the programmable internal timing reference circuit (120), returns an NRZ coded data stream (RD data out), which is routed via two coupling capacitors to the connector (201) of the host board (200) depicted in **figure 2**.

The Loss of signal (LOS) circuit monitors the power level of the incoming signal and generates an alarm when the received signal is below a pre-defined threshold.

The transmitting section (130) receives a differential NRZ signal (RD data in) from the connector (201) of the host board (200).

The NRZ data signal (RD data in), AC-coupled, is routed to the encoding circuit (131) and converted into a CMI-coded stream with the support of an internal reference clock belonging to the programmable internal timing reference circuit (120).

The transmit buffer (132) receive the CMI-coded stream and provides an output signal capable of driving a 75 Ohm transmission line compliant with ITU-G.703. The CMI coded signal is transmitted by the coax cable connector (102).

In the programmable internal timing reference circuit (120), an on board VCO provides the clock reference required by the encoder/decoder to perform the CMI/NRZ and NRZ/CMI conversions.

The host card controller (202) can configure, via a 2-wire clocked Serial Interface, the programmable internal timing reference circuit (120), setting it for the STS3/STM1 or PDH-E4 application. Such serial interface consists of :
- MOD-DEF 1 - the 2-wire serial interface clock signal
- MOD-DEF 2 - the 2-wire serial interface data signal

The host card controller (202) can recognise, via the MOD-Def0 pin, that the module is present and, via the MOD-Def1 and MOD-Def2 pins of the 2-wire clocked serial interface ( I2Cbus), can access the internal EEPROM memory (140) where sophisticated identification information (Table reported in Figure 3) have previously been stored in an MSA compliant fashion:
- CESFP's characteristics
- Module manufacturer
- Other information.
The CESFP information stored in the memory, read through the serial interface, will inform the host card controller that that module is an Electrical STM1/STS3/E4 transceiver whose final setting needs an appropriate programming according to the user network configuration.

The host controller, via the same serial interface, will input the chosen configuration.

While a preferred embodiment of the present invention has been shown and described, it should be understood that the present invention is not limited thereto since other embodiment may be made by those skilled in the art without departing from scope thereof. In one of said other embodiment some circuits positioned, according to the above description, in the configurable module may be transferred to the host board (200).

In particular the CMI decoder (113) and the CMI encoder (131), together with the programmable internal timing reference circuit (120), can be placed on the host board instead of inside the CESFP module, either in a discrete form or integrated within an Application Specific Integrated Circuit (ASIC).

It is thus contemplated that the present invention encompasses any and all such embodiments covered by the following claims.

## Claims

1. Configurable electrical transceiver module pluggable on a receptacle designed for receiving such module and electrically connecting such module to a host circuit board (200) mounted within a chassis of a host system, said electrical transceiver module being configurable to act as an electrical interface for both synchronous and plesiochronous transmissions, and including:
- printed circuit means (100) having a first and a second end;
- coaxial connecting means (101, 102) mounted at the first end of said printed circuit means (100);
- multi-pad electrical connecting means mounted at the second end of said printed circuit means (100);
- receiving/transmitting means (110, 130), mounted at least partly on said printed circuit means (100) and connected to said coaxial connecting means, to said multi-pad electrical means and to timing means (120) providing timing signals required by said receiving/transmitting means (110, 130);
**characterised in that**:
- said printed circuit means are mounted in housing means of the Small Form-Factor Pluggable type, and
- said timing means (120) comprise a programmable internal timing reference circuit (120) providing a clock reference for said receiving/ transmitting means (110, 130).

2. The module of claim 1, **characterised in that** said internal timing reference circuit (120) includes an on-board VCO and a 2-wire clocked serial interface connected with the host card controller (202).

3. The module of claim 2, **characterised in that** said 2-wire clocked serial interface is used for the in-field programming of the module as an STM1/STS3 interface type or as a PDH-E4 interface type.

4. The module of claim 3 **characterised in that** is adapted to be used in combination with a host system of the type including a host card controller (202) and said in-field programming is done by the host card controller (202) when the module is already in field.

5. The module of claim 3 or claim 4 **characterised in that** it further includes memory means (140) storing identification information, including said interface type, and accessible via said 2-wire clocked serial interface to the host card controller (202) for recognition of the interface type and the consequent in-field programming

6. The module of claim 5, **characterised in that** said memory means are of the EEPROM type and said identification information are stored in a Small Form-Factor Pluggable Transceiver Multi-Source Agreement compliant fashion.

7. The module of any preceding claim, **characterised in that** is adapted to be used in combination with a host system of the type including a host card controller (202) connected to ground via a pin of the module in order to recognise whether the module is present.

8. The module of any preceding claim, **characterised in that**:
- a CMI decoder (103) in a receiving section of said receiving/transmitting means (110, 130);
- a CMI encoder (131) in a transmitting section of said receiving/transmitting means (110, 130);
- said timing reference circuit (120),
- are placed on the host system and are connected to the units of the receiving/transmitting means (110, 130) mounted on said printed circuit means via said multi-pad electrical connecting means.

## Patentansprüche

1. Konfigurierbares elektrisches Sender/Empfänger-Modul, das in eine Aufnahme eingesteckt werden kann, die für die Aufnahme solcher Module und die elektrische Verbindung solcher Module mit einer Host-Schaltkreisplatine (200) geeignet ist, die im Chassis eines Hostsystems eingebaut ist, wobei das besagte elektrische Sender/Empfänger-Modul so konfiguriert werden kann, dass es als eine elektrische Schnittstelle sowohl für synchrone als auch für plesiochrone Übertragungen dienen kann und Folgendes umfasst:
- ein Leiterplattenmittel (100) mit einem ersten und einem zweiten Ende;
- Koaxialverbindungmittel (101, 102), die an dem ersten Ende des besagten Leiterplattenmittels (100) angebracht sind;
- ein elektrisches Steckkontaktleisten-Verbindungsmittel, das an dem zweiten Ende des besagten Leiterplattenmittel (100) angebracht ist;
- Empfangs-/Sendemittel (110, 130), die zumindest teilweise auf dem besagten Leiterplattenmittel (100) untergebracht sind und die mit den besagten Koaxialverbindungsmitteln, den besagten elektrischen Steckkontaktleistenmitteln und den Zeitsteuerungsmitteln (120) verbunden sind, um Zeitsteuerungssignale bereitzustellen, die von besagten Empfangs-/Sendemitteln (110, 130) benötigt werden;
**dadurch gekennzeichnet, dass**:
das besagte Leiterplattenmittel in einem Gehäusemittel vom steckbaren Typ mit kleinem Formfaktor (SFP) eingebaut ist, und
das besagte Zeitsteuerungsmittel (120) eine programmierbare interne Zeitsteuerungs-Referenzschaltung (120) umfasst, die eine Taktreferenz für die besagten Empfangs-/Sendemittel (110, 130) bereitstellt.

2. Modul nach Anspruch 1, **dadurch gekennzeichnet, dass** die besagte interne Zeitsteuerungs-Referenzschaltung (120) einen auf der Platine untergebrachten spannungsgesteuerten Oszillator VCO und eine getaktete serielle Zweidrahtschnittstelle enthält, die mit der Hostkarten-Steuereinheit (202) verbunden ist.

3. Modul nach Anspruch 2, **dadurch gekennzeichnet, dass** die getaktete serielle Zweidrahtschnittstelle für die Vorort-Programmierung des Moduls als eine Schnittstelle vom Typ STM1/STS3 oder als eine Schnittstelle vom Typ PDH-E4 verwendet wird.

4. Modul nach Anspruch 3, **dadurch gekennzeichnet**, das es zur Verwendung in Kombination mit einem Hostsystem des Typs geeignet ist, das eine Hostkarten-Steuereinheit (202) enthält, und dass die besagte Vorort-Programmierung durch die Hostkartensteuereinheit (202) erfolgt, wenn sich das Modul bereits vor Ort befindet.

5. Modul nach Anspruch 3 oder Anspruch 4, **dadurch gekennzeichnet, dass** es des Weiteren ein Speichermittel (140) enthält, das Identifikations-Informationen speichert, darunter Informationen über den besagten Typ der Schnittstelle, und auf die über die getaktete serielle Zweidrahtschnittstelle von der Hostkarten-Steuereinheit (202) zwecks Erkennung des Schnittstellentyps und für die nachfolgende Vorort-Programmierung zugegriffen werden kann.

6. Modul nach Anspruch 5, **dadurch gekennzeichnet, dass** das besagte Speichermittel vom EEPROM-Typ ist und dass die besagten Identifikations-Informationen in einer Weise gespeichert sind, die mit dem Small Form-Factor Pluggable Transceiver Multi-Source Agreement übereinstimmen.

7. Modul nach einem der vorhergehenden Ansprüche, **dadurch gekennzeichnet, dass** es in Kombination mit einem Hostsystem des Typs verwendet werden kann, das eine Hostkarten-Steuereinheit (202) enthält, die über einen Pin des Moduls mit Masse verbunden ist, um zu erkennen, ob das Modul vorhanden ist.

8. Modul nach einem der vorhergehenden Ansprüche, **dadurch gekennzeichnet, dass**:
- ein CMI-Decodierer (103) in einem Empfangsbereich der Empfangs-/Sende-Mittel (110, 130);
- ein CMI-Codierer (131) in einem Sendebereich der Empfangs-/Sende-Mittel (110, 130);
- die besagte Zeitsteuerungs-Referenzschaltung (120),
- im Hostsystem untergebracht und mit den auf dem Leiterplattenmittel angeordneten Einheiten der Empfangs-/Sendemittel (110, 130) über die elektrischen mehrpoligen Steckkontaktleisten-Verbindungsmittel verbunden sind.

## Revendications

1. Module d'émetteur-récepteur électrique configurable, enfichable sur un réceptacle conçu pour recevoir un tel module et raccorder électriquement ce module à une carte de circuits imprimé hôte (200) montée dans un châssis d'un système hôte, ledit module d'émetteur-récepteur électrique étant configurable pour agir comme interface électrique pour une transmission synchrone mais aussi plésiochrone, et comprenant :
- des moyens de circuit imprimé (100) ayant une première et une deuxième extrémité ;
- des moyens de raccordement coaxiaux (101, 102) montés à la première extrémité desdits moyens de circuit imprimé (100) ;
- des moyens de raccordement électriques multiplot montés à la deuxième extrémité desdits moyens de circuit imprimé (100) ;
- des moyens de réception / transmission (110, 130), montés au moins partiellement sur lesdits moyens de circuit imprimé (100) et raccordés auxdits moyens de raccordement coaxiaux, auxdits moyens électriques multiplot et à des moyens de synchronisation (120) fournissant des signaux de synchronisation requis par lesdits moyens de réception / transmission (110, 130) ;
**caractérisé en ce que** :
- lesdits moyens de circuit imprimé sont montés dans des moyens de logement de type Small Form-Factor Pluggable, et
- lesdits moyens de synchronisation (120) comprennent un circuit de synchronisation de référence interne programmable (120) fournissant une référence d'horloge pour lesdits moyens de réception / transmission (110, 130).

2. Module selon la revendication 1, **caractérisé en ce que** ledit circuit de synchronisation de référence interne (120) comprend un oscillateur commandé en tension (VCO) incorporé et une interface sérielle à 2 fils commandée par horloge raccordée au dispositif contrôleur de la carte hôte (202).

3. Module selon la revendication 2, **caractérisé en ce que** ladite interface en série synchronisée à 2 fils est utilisée pour la programmation sur place du module comme type d'interface STM1/STS3 ou comme type d'interface PDH-E4.

4. Module selon la revendication 3, **caractérisé en ce qu'**il est adapté pour être utilisé en combinaison avec un système hôte du type comprenant un dispositif contrôleur de carte hôte (202) et ladite programmation sur place est réalisée par le dispositif contrôleur de la carte hôte (202) lorsque le module est déjà en place.

5. Module selon la revendication 3 ou la revendication 4, **caractérisé en ce qu'**il comprend, en outre, des moyens de mémoire (140) stockant des informations d'identification, comprenant ledit type d'interface, et accessibles par l'intermédiaire de ladite interface en série synchronisée à 2 fils audit dispositif contrôleur de la carte hôte (202) pour une reconnaissance du type d'interface et de la programmation sur place consécutive.

6. Module selon la revendication 5, **caractérisé en ce que** lesdits moyens de mémoire sont de type EEPROM et lesdites informations d'identification sont stockées de manière conforme au Small Form-Factor Pluggable Transceiver Multi-Source Agreement.

7. Module selon l'une quelconque des revendications précédentes, **caractérisé en ce qu'**il est adapté pour être utilisé en combinaison avec un système hôte du type comprenant un dispositif contrôleur de carte hôte (202) raccordé à la terre par l'intermédiaire d'une broche du module afin de reconnaître si le module est présent.

8. Module selon l'une quelconque des revendications précédentes, **caractérisé en ce que** :
- un décodeur CMI (103) dans une section de réception desdits moyens de réception / transmission (110, 130) ;
- un codeur CMI (131) dans une section de transmission desdits moyens de réception / transmission (110, 130) ;
- ledit circuit de synchronisation de référence (120) ;
- sont placés sur le système hôte et sont raccordés aux unités des moyens de réception / transmission (110, 130) montés sur lesdits moyens de circuit imprimé par l'intermédiaire des moyens de raccordement électriques multiplot.
